# EUROPÄISCHE PATENTANMELDUNG

(11) **EP 1 193 118 A2**
(43) Veröffentlichungstag der Anmeldung: **03.04.2002**
(21) Anmeldenummer: 01123138.8
(22) Anmeldetag: 27.09.2001
(51) Int. Cl.: B60N 2/60

(54) **Schutzbezug für Fahrzeugsitze**

(30) Priorität: 29.09.2000 DE 10048461
(71) Anmelder: MEWA Textil-Service AG & Co Management oHG, 65189 Wiesbaden (DE)
(72) Erfinder: Küttelwesch, Rudolf, 65527 Niedernhausen (DE); Owerfeldt, Nina, 65199 Wiesbaden (DE)
(74) Vertreter: Tergau & Pohl Patentanwälte

(57) **Zusammenfassung**

Ein Schutzbezug (1) für einen Autositz (2) mit einem ersten Abdeckteil (4) für die Sitzfläche, einem zweiten Abdeckteil (6) für die Lehnenvorderseite und einem dritten Abdeckteil (8) für die Lehnenrückseite, bei dem das zweite Abdeckteil (6) und das dritte Abdeckteil (8) zur Bildung einer Bezugshülle in Seitenbereichen miteinander verbunden sind, soll einerseits eine zuverlässige Reinhaltung des Autositzes (2) gewährleisten und andererseits auch bei Kraftfahrzeugen mit im Autositz (2) angeordnetem Seitenairbag ohne Sicherheitseinbußen verwendbar sein. Dazu greifen erfindungsgemäß an den Seitenstreifen (10,12) Spannmittel (36) derart an, daß über die Spannmittel (36) eine im Bereich eines Seitenstreifens (10, 12) und/oder des zweiten Abdeckteils (6) geführte erste Sollbruchnaht (32) mit einer Vorspannung beaufschlagbar ist.

## Beschreibung

Die Erfindung betrifft einen Schutzbezug für einen Autositz mit einem ersten Abdeckteil für die Sitzfläche, einem zweiten Abdeckteil für die Lehnenvorderseite und einem dritten Abdeckteil für die Lehnenrückseite, wobei das zweite Abdeckteil und das dritte Abdeckteil zur Bildung einer Bezugshülle in Seitenbereichen jeweils über einen Seitenstreifen miteinander verbunden sind.

Bei der Wartung, Reparatur oder Inspektion eines Kraftfahrzeugs in einer Autowerkstatt kann eine Probefahrt im öffentlichen Verkehr durch einen Kraftfahrzeugmechaniker erforderlich sein. Bei einer derartigen Benutzung eines Kundenfahrzeugs durch den Kraftfahrzeugmechaniker besteht die Gefahr, dass der Autositz durch schmutzige, insbesondere durch ölige, Berufsbekleidung verschmutzen kann. Um dies sicher zu verhindern, kann der Autositz eines einer Wertstatt anvertrauten Kraftfahrzeugs mit einem öl- und schmutzabweisenden oder -aufsaugenden Schutzbezug versehen werden.

Zu diesem Zweck können Einmalschutzbezüge aus dünner Kunststoffolie Verwendung finden. Derartige Einmalschutzbezüge lassen sich jedoch nur unbefriedigend handhaben und neigen darüberhinaus vergleichsweise schnell zum Zerreißen. Weiterhin verursachen derartige Einmalschutzbezüge in unerwünschter Weise zusätzlichen Abfall.

Alternativ kann auch ein mehrfachverwendbarer Schutzbezug für den Autositz zur Verwendung kommen, wie er beispielsweise aus der EP 0 678 417 bekannt ist. Ein derartiger Schutzbezug ist aus einem belastbaren, für die Beanspruchung mit verölter oder beschmutzter Berufsbekleidung besonders angepassten Gewebe gefertigt. Der bekannte Schutzbezug ist zudem in besonderer Weise an die übliche Form eines Autositzes angepasst und kann insbesondere auch bei unterschiedlichen, individuellen Sitzgrößen in besonders einfacher Weise angelegt und wieder entfernt werden. Dabei weist der Schutzbezug ein erstes Abdeckteil auf, das in montiertem Zustand zur Abdeckung der Sitzfläche des Autositzes dient. Zudem umfasst der Schutzbezug ein zweites und ein drittes Abdeckteil, die in montiertem Zustand zur Abdeckung der Lehne des Autositzes vorgesehen sind. Das zweite Abdeckteil dient dabei zur Abdeckung der Lehnenvorderseite, und das dritte Abdeckteil dient zur Abdeckung der Lehnenrückseite.

Für eine besonders einfache Handhabbarkeit und für eine gute Passform am Autositz können das zweite und das dritte Abdeckteil eines derartigen Schutzbezuges an ihren Seitenbereichen zur Bildung einer Bezugshülle miteinander verbunden sein. Beim aus der EP 0 678 417 bekannten Schutzbezug ist diese Verbindung über Seitenstreifen hergestellt. Die Verbindung ist dabei derart ausgebildet, dass eine lückenlose, die Lehne des Autositzes zumindest im oberen Bereich vollständig umhüllende Bezugshülle entsteht, so dass an keiner Stelle eine Verschmutzung bis zum eigentlichen Sitz durchdringen kann.

Gerade bei Kraftfahrzeugen moderneren Entwicklungstyps kommen in den Autositzen jedoch in verstärktem Maße sogenannte Seitenairbags zum Einsatz. Dabei ist in der Rückenlehne des Autositzes eine Vorrichtung angeordnet, die unter geeigneten Bedingungen - die beispielsweise einen Aufprall in eindeutiger Weise charakterisieren - ein Luftkissen zur Entfaltung bringt. Dieses Luftkissen füllt den Raum beispielsweise zwischen Fahrersitz und Autotür in geeigneter Weise derart aus, dass das Verletzungsrisiko für den Fahrer und/oder Beifahrer deutlich gemindert ist.

Voraussetzung für die ordnungsgemäße Funktionsfähigkeit eines derartigen Seitenairbags ist jedoch, dass sich das Luftkissen ungehindert in der vorbestimmten Weise entfalten und den ihm zugewiesenen Raum somit zuverlässig ausfüllen kann. Bei der Verwendung gerade eines mehrfach verwendbaren Schutzbezuges der oben genannten Art mit seinem üblicherweise stabil ausgeführten Gewebe und seiner die Lehne des Autositzes umhüllenden Bezugshülle ist jedoch die freie Entfaltungsmöglichkeit des Seitenairbags oder Luftkissens nicht mehr unbedingt gewährleistet. Für Kraftfahrzeuge mit Seitenairbags kann somit die Verwendung des bekannten Schutzbezugs eine Verminderung des eigentlich vorhandenen Sicherheitsstandards darstellen. Dies kann insbesondere deswegen problematisch sein, da die Probefahrten üblicherweise im öffentlichen Verkehrsbereich und somit unter dem durch diesen gegebenen Gefährdungspotential gegenüber Unfällen durchzuführen sind.

Sitzschutzbezüge, die ein ungestörtes Austreten auch von Seitenairbags ermöglichen sollen, sind aus den Druckschriften DE 200 08 237 U1, DE 297 02 869 U1, DE 297 04 593 U1, DE 197 27 746 A1 und DE 196 48 529 C1 bekannt. Diese Schutzbezüge sind jedoch für eine dauerhafte Installation am Autositz vorgesehen und für einen vorübergehenden Gebrauch auch für verschiedene Sitzmodelle, beispielsweise im Werkstattbereich, nicht geeignet.

Der Erfindung liegt daher die Aufgabe zugrunde, einen Schutzbezug der oben genannten Art anzugeben, der einerseits für eine zuverlässige Reinhaltung auch verschiedenartiger Autositze universell einsetzbar und andererseits auch bei Kraftfahrzeugen mit im Autositz angeordnetem Seitenairbag ohne Sicherheitseinbußen verwendbar ist.

Diese Aufgabe wird erfindungsgemäß gelöst, indem an den Seitenstreifen Spannmittel derart angreifen, daß über die Spannmittel eine im Bereich eines Seitenstreifens und/oder des zweiten Abdeckteils geführte erste Sollbruchnaht mit einer Vorspannung beaufschlagbar ist.

Vorteilhafte Ausgestaltungen der Erfindung sind Gegenstand der Unteransprüche.

Die Erfindung geht von der Überlegung aus, dass für eine zuverlässige Reinhaltung des Autositzes eine durchgehende Bedeckung der möglicherweise mit verschmutzter Berufskleidung in Kontakt kommenden Oberflächenbereiche des Autositzes durch den Schutzbezug beibehalten werden sollte. Somit sollten gerade auch diejenigen Bereiche, in denen der Seitenairbag üblicherweise vorgesehen ist, von schützendem Material bedeckt sein. Um aber dennoch eine ungehinderte und zuverlässige Entfaltung des Seitenairbags im Bedarfsfall sicherzustellen, sollte der den entsprechenden Oberflächenbereich des Autositzes abdeckende Bereich des Schutzbezuges im Hinblick auf dieses Kriterium, nämlich auf seine Bersteigenschaften, geeignet gewählt sein. Dazu weist der Schutzbezug eine Sollbruchnaht auf, die eine im Vergleich zu einer üblichen Naht entsprechend geringer dimensionierte Berstfestigkeit aufweist.

Gerade im Hinblick auf eine universelle Einsetzbarkeit des Schutzbezuges auch für unterschiedlich dimensionierte Autositze, beispielsweise im Umfeld einer Werkstatt, sollten zudem Mittel vorgesehen sein, über die nahezu unabhängig von den Einsatzbedingungen ein bedarfsgerechtes Bersten dieser Sollbruchnaht sichergestellt ist. Dies ist erreichbar, indem die Sollbruchnaht im montierten Zustand des Schutzbezugs unter geeignet gewählte Vorspannung gesetzt wird. Um dies zu ermöglichen, weist der Schutzbezug entsprechende Spannmittel auf.

Die Spannmittel sind dabei zweckmäßigerweise derart ausgestaltet, dass sie über die Seitenstreifen das zweite Abdeckteil an der Sitzlehne aufspannen. Dazu umgreifen die Spannmittel zweckmäßigerweise gemeinsam mit den Seitenstreifen die Sitzlehne rückseitig und setzen dabei in montiertem Zustand das zweite Abdeckteil unter eine Vorspannung. Diese Vorspannung wirkt somit auch auf die in den Seitenstreifen geführten Sollbruchnähte und/oder im zweiten Abdeckteil geführten Sollbruchnähte.

Für eine besonders vielfältige Einsatzmöglichkeit ist der Schutzbezug vorteilhafterweise als universell anwendbarer oder für eine besonders große Vielzahl von Autositztypen verwendbarer Schutzbezug ausgebildet. Um dabei die Funktionsfähigkeit auch für eine große Vielzahl von möglichen Seitenairbag-Konstruktionen sicherzustellen, sollte der für ein bedarfsgerechtes Bersten ausgestaltete Flächenbereich für besonders flexible Einsatzmöglichkeiten geeignet sein. Wie sich überraschend herausgestellt hat, ist eine nahezu universelle Verwendbarkeit des Schutzbezuges für alle Arten von Autositzen unter Beibehaltung der vollen Funktionsfähigkeit der Seitenairbags auf besonders günstige Weise ermöglicht, indem die erste Sollbruchnaht vorteilhafterweise geeignet mit einer weiteren Sollbruchnaht kombiniert ist. Dazu ist vorteilhafterweise im wesentlichen parallel zur jeweils ersten Sollbruchnaht, insbesondere zweckmäßigerweise unter Einhaltung eines im wesentlichen konstanten Nahtabstandes von etwa 3 cm, eine zweite Sollbruchnaht geführt. Diese ist dabei zweckmäßigerweise im zweiten Abdeckteil, also im Abdeckteil für die Lehnenvorderseite, geführt.

Eine nahezu ungehinderte Entfaltungsmöglichkeit für den Seitenairbag ist gewährleistet, indem die mit der Sollbruchnaht versehenen Oberflächenbereiche hinsichtlich ihrer Belastbarkeit und Reißfestigkeit derart gewählt sind, dass sie bei den für Seitenairbags beim Auslösen charakteristischen Parametern wie Kräfteverteilung und/oder Druckverhältnisse zuverlässig bersten, ohne jedoch beim täglichen Gebrauch zu schnell zu verschleißen. Um für die überwiegende Mehrzahl der üblicherweise verwendeten Seitenairbags eine zuverlässige Entfaltung zu ermöglichen, ist dabei jede Sollbruchnaht vorzugsweise derart ausgebildet, dass sie einen Berstdruck von weniger als 600 kPa, vorzugsweise von weniger als 400 kPa, aufweist. Die Bersteigenschaften und insbesondere der Berstdruck können dabei beispielsweise nach den Vorschriften und Randbedingungen der DIN EN ISO 13938-2 ermittelt werden.

Die Sollbruchnaht ist dabei vorzugsweise als durchgängige Naht, d. h. unter Vermeidung von Nahtansätzen in der Naht, ausgeführt.

Zur Sicherstellung von für den Einsatz von Seitenairbags unbedenklichen Bersteigenschaften ist die Sollbruchnaht in besonders vorteilhafter Weiterbildung als Doppelsteppstichnaht ausgebildet. In weiterer vorteilhafter Ausgestaltung ist die Sollbruchnaht mit einem Nähfaden einer Feinheit von zumindest Nm 120, in besonders vorteilhafter Weiterbildung von zumindest Nm 150, ausgeführt. Die Feinheit des Nähfadens ist dabei als sogenannte Etikett-Nummer oder metrische Nummer Nm angegeben. Die metrische Nummer Nm gibt dabei die Länge desjenigen Nähfadens an, der 1g wiegt. Mit anderen Worten: ein Nähfaden der Feinheit Nm 120, der 1g wiegt, ist 120 m lang. Als Nähfaden kommt vorzugsweise PES-(Polyester-)Umspinnzwirn zum Einsatz.

Für eine besonders einfache Herstellbarkeit des Schutzbezugs ist vorteilhafterweise eine Verbindungsnaht des zweiten Abdeckteils mit dem jeweiligen Seitenstreifen als erste Sollbruchnaht ausgeführt. Gerade dadurch ist diese Sollbruchnaht auch derart geeignet positionierbar, dass sie eine ordnungsgemäße Funktionsfähigkeit des Seitenairbags unabhängig von der genauen Ausführung des Autositzes gewährleistet.

Eine besonders einfache Montierbarkeit ist dabei erreichbar, indem die Spannmittel in weiterer vorteilhafter Ausgestaltung einer Anzahl von jeweils paarweise miteinander verbindbaren Seilzugelementen umfassen, wobei jeweils eines der paarweise miteinander zusammenwirkenden Seilzugelemente mit jedem der Seitenstreifen verbunden ist. Die paarweise zusammenwirkenden Seilzugelemente, die insbesondere als Kordelstücke ausgestaltet sein können, können dabei insbesondere zur Befestigung des Schutzbezugs am Autositz durch einen fixierbaren Verschluß geeignet miteinander verbunden werden. Um die Montage des Schutzbezugs noch weiter zu erleichtern, ist in weiterer vorteilhafter Ausgestaltung jedes zusammenwirkende Paar von Seilzugelementen jeweils in einem auf das dritte Abdeckteil aufgesteppten Tunneldurchzug geführt.

Für eine besonders günstige Handhabbarkeit beim Anlegen oder Entfernen des Schutzbezuges sind an dessen ersten, zweiten und/oder dritten Abdeckteil vorteilhafterweise eine Anzahl von Griffmitteln zum Ab- oder Aufziehen auf den Autositz angeordnet. Als Griffmittel können dabei insbesondere Griffschlaufen und/oder Grifflaschen vorgesehen sein. In weiterer zweckmäßiger Ausgestaltung ist im Bereich des oberen Lehnenrands ein auch als Aufhänger vorgesehenes Griffmittel angeordnet.

Vorteilhafterweise sind die freien Ränder der Abdeckteile mit einem Schrägband eingefasst oder paspeliert.

In besonders zweckmäßiger Ausgestaltung sind die Abdeckteile aus einem ölsaugfähigen Gewebe, beispielsweise aus einem Mikrofasergewebe oder aus einem baumwollhaltigen Mischgewebe, gefertigt. Dadurch ist ein Durchdringen von Verschmutzungen insbesondere von Flüssigkeiten auf den Autositz zuverlässig verhindert. Weiterhin kann gegebenenfalls auch eine Schutzbeschichtung vorgesehen sein. Das Gewebe weist zweckmäßigerweise ein Gewebegewicht von 100 g/m² bis 1000 g/m², vorzugsweise von etwa 300 g/m², auf.
Vorteilhafterweise wird der Schutzbezug zu einer lediglich vorübergehenden Abdeckung eines Autositzes, insbesondere während eines Werkstattaufenthaltes, verwendet.

Die mit der Erfindung erzielten Vorteile bestehen insbesondere darin, dass durch die an besonders geeigneter Stelle des Schutzbezugs, vorgesehenen Sollbruchnähte einerseits eine durchgängige, flächige Abdeckung des Autositzes gewährleistet ist. Somit ist die Gefahr einer Verschmutzung des Autositzes besonders gering gehalten, zumal in im Hinblick auf eine Verschmutzungsgefahr exponierten Bereichen konsequent auf Öffnungen im Schutzbezug verzichtet ist. Andererseits ist durch die Vorspannbarkeit der Sollbruchnähte über die Spannmittel sichergestellt, dass bei Auslösen eines Seitenairbags in diesen Bereichen gezielt ein Bersten eintritt und eine zuverlässige Entfaltung des Seitenairbags somit gewährleistet ist. Das Bersten der Sollbruchnähten erfolgt dabei in vorhersehbarer Weise und nicht etwa unkontrolliert oder zufällig, so dass auch sichergestellt ist, dass das Luftkissen des Seitenairbags den ihm zugewiesenen Raumbereich im Fahrzeuginnenraum zuverlässig ausfüllen kann. Gerade durch das Zusammenwirken mit den Spannmitteln ist die jeweilige Sollbruchnaht in montiertem Zustand dauerhaft unter Vorspannung haltbar, was die gewünschten Bersteigenschaften und das bedarfsgerechte Aufreißen der Sollbruchnaht bei auslösendem Seitenairbag in besonderem Maße begünstigt. Durch die Spannmittel ist somit einerseits die Wirksamkeit der Sollbruchnähte noch weiter verbessert, wobei andererseits auch eine typenunabhängige Verwendung des Schutzbezugs für verschiedene Autositzmodelle besonders vereinfacht ist.

Ein Ausführungsbeispiel der Erfindung wird anhand einer Zeichnung näher erläutert. Darin zeigen:
- Fig. 1: einen auf einen Autositz aufgezogenen Schutzbezug in einer Frontansicht,
- Fig. 2: den Schutzbezug nach Fig. 1 in einer Rückansicht,
- Fig. 3: den Schutzbezug in aufgehängter Position in einer Rückansicht, und
- Fig. 4: Spannmittel für den Schutzbezug nach Fig. 1.

Gleiche Teile sind in allen Figuren mit den selben Bezugszeichen versehen.

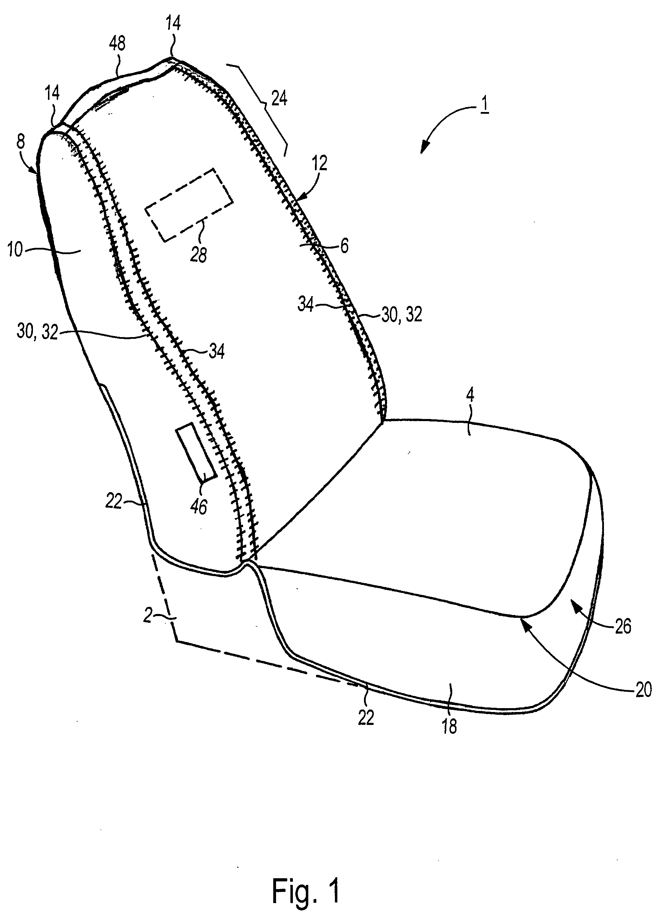

Der Schutzbezug 1 gemäß den Figuren 1 bis 3 ist zur sicheren Abdeckung eines Autositzes 2, insbesondere zum Schutz vor Verschmutzungen, bei einer Benutzung eines Kraftfahrzeugs mit verschmutzter Berufskleidung, beispielsweise während eines Werkstattaufenthaltes, vorgesehen. Dazu umfasst der in Fig. 1 gezeigte Schutzbezug 1 ein erstes Abdeckteil 4 zur Abdeckung der Sitzfläche (sogenanntes Sitzflächenabdeckteil), ein zweites Abdeckteil 6 für die Abdeckung der Lehnenvorderseite (sogenanntes Lehnenvorderseitenteil) und ein drittes Abdeckteil 8 für die Abdeckung der Lehnenrückseite (sogenanntes Lehnenrückseitenteil). Zur Bildung einer Bezugshülle sind das zweite Abdeckteil 6 und das dritte Abdeckteil 8 in ihren Seitenbereichen über jeweils einen Seitenstreifen 10, 12 miteinander verbunden. Die kappenartige Verbindung des zweiten Abdeckteils 6 mit dem dritten Abdeckteil 8 ermöglicht dabei ein besonders einfaches Aufsetzen des Schutzbezugs 1 auf die Lehne des Autositzes 2. Im oberen Bereich der Lehne sind die Seitenstreifen 10, 12 in runder Nahtführung 14 bogenartig mit den Abdeckteilen 6, 8 verbunden.

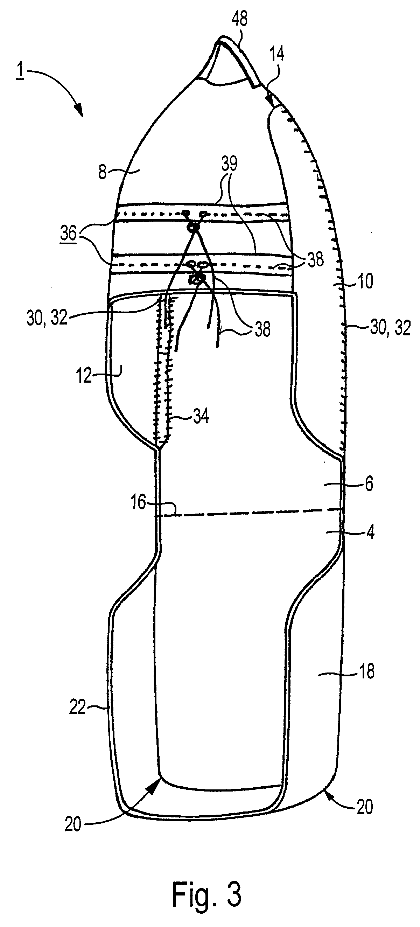

Die Abdeckteile 4, 6, 8 sind im Ausführungsbeispiel von einem durchgehenden Werkstoffteil, insbesondere einem Gewebeteil gebildet. Sie können jedoch auch aus Einzelteilen zusammengesetzt sein, wobei eine in Fig. 3 strichliert dargestellte Verbindungsnaht 16 zum Verbinden des ersten, für die Sitzfläche vorgesehenen Abdeckteils 4 mit dem zweiten, für die Lehnenvorderseite vorgesehenen Abdeckteil 6 dienen kann. Derartige Verbindungsnähte können an geeigneten Stellen, beispielsweise an Kanten oder in Falten des Sitzes, angeordnet sein.

Das erste Abdeckteil 4 weist an seinem Rand eine etwa rechtwinklig abstehende Schürze 18 auf, die zum Schutz der Flanken des Autositzes 2 dient. Weiterhin weist das erste Abdeckteil 4 abgerundete Ecken 20 auf, an die die Schürze 18 in gerundeter Nahtführung anschließt. Die freien Ränder der Abdeckteile 4, 6, 8 und der Schürze 18 sind zu Verstärkung und zum Schutz mit einer saumartigen Umrandung, im Ausführungsbeispiel mit einem Schrägband 22, versehen.

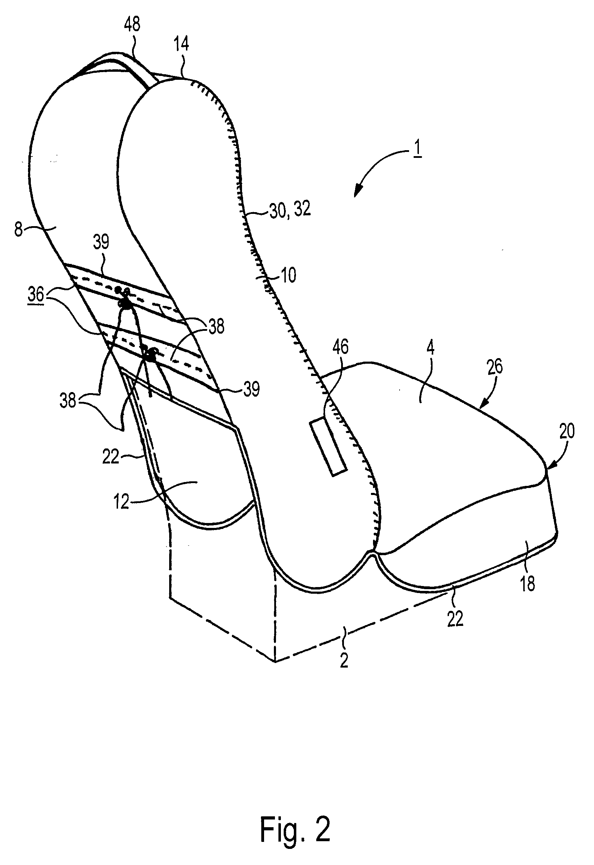

Die Figuren 1 und 2 zeigen den Schutzbezug 1 in jeweils einer Darstellung, wie er aufgezogen auf dem Autositz 2 ausgestaltet ist. Dabei ist erkennbar, dass nur ein geringer Teil des Autositzes 2 vom Schutzbezug 1 nicht bedeckt ist. Gegebenenfalls kann zum Schutz auch dieses Bereichs die Schürze 18 gemeinsam mit den Seitenstreifen 10, 12 überlappend ausgeführt sein. Der Schutzbezug 1 ist weitestgehend der Formgebung des Autositzes 2 angepasst. Insbesondere hinsichtlich der Dimensionierung der Abdeckteile 4, 6, 8 und der Seitenstreifen 10, 12 ist der Schutzbezug 1 dabei derart ausgebildet, dass er für möglichst viele Sitzgrößen universell verwendbar ist.

Das zweite Abdeckteil 6 und das dritte Abdeckteil 8 sind im Bereich 24 der Kopfstütze schmaler ausgeführt, so dass eine verbesserte Passform gegeben ist. Die Schürze 18 ist derart lang ausgeführt, dass weitgehend die komplette Flanke der Sitzfläche gegebenenfalls inklusive des Sitzsockels, vor Verunreinigung geschützt ist. Gegebenenfalls kann dabei auch das vordere Teil 26 der Schürze 18 in Verlängerung des ersten Abdeckteils 4 von diesem gebildet sein. Dies kann fertigungstechnisch oder bei der Verwendung für bestimmte Autositztypen von Vorteil sein.

Im Sichtbereich des ersten Abdeckteils 4 und/oder des zweiten Abdeckteils 6 kann bedarfsweise ein Etikett 28 zur Kennzeichnung angebracht sein. Auf diese Weise ist einerseits das Lehnenteil des Schutzbezugs 1 schneller erkennbar. Andererseits fällt bei gleichfarbigen Autositzen auf, dass der Schutzbezug 1 noch aufgezogen ist. Ein Vergessen des Schutzbezugs 1 im Kundenfahrzeug ist somit verhindert. Ein gleichwertiger Schutz gegen ein Vergessen des Schutzbezugs 1 im Kundenfahrzeug ist auch erreichbar, indem die Seitenstreifen 10, 12 gegenüber den Abdeckteilen 4, 6, 8 farbig abgesetzt oder andersfarbig ausgeführt sind.

Der Schutzbezug 1 ist zur universellen Verwendbarkeit auch bei einem Autositz 2 mit Seitenairbag ausgebildet, ohne dass dabei die Funktionsfähigkeit der Seitenairbags beeinträchtigt ist. Dazu sind die Verbindungsnähte 30, über die das zweite Abdeckteil 6 mit den Seitenstreifen 10, 12 verbunden ist, als Sollbruchnaht 32 ausgeführt.

Um die universelle Einsetzbarkeit des Schutzbezuges 1 unter Beibehaltung der vollen Funktionsfähigkeit der Seitenairbags auch bei verschiedenen Modellen oder Typen des Autositzes 2 besonders zu begünstigen, ist zudem im wesentlichen parallel zur jeweils ersten Sollbruchnaht 32 beabstandet von dieser im zweiten Abdeckteil 6 jeweils eine zweite Sollbruchnaht 34 geführt. Als Abstand ist dabei eine über die Länge der jeweiligen Naht annähernd konstant gehaltene Distanz von etwa 3 cm gewählt.

Im Vergleich zu einer üblichen oder gewöhnlichen Naht zeichnen sich die Sollbruchnähte 32, 34 durch eine insgesamt geringere Berstfestigkeit aus. Dabei sind die Sollbruchnähte 32, 34 derart ausgeführt, dass sie bei Auslösen eines in der Lehne des Autositzes 2 angeordneten Seitenairbags zuverlässig aufreißen, so dass ein ungehindertes Entfalten des Seitenairbags gewährleistet ist. Dazu sind die Sollbruchnähte 32, 34 jeweils derart ausgelegt, dass sie einen Berstdruck von etwa 200 kPa und somit von weniger als 400 kPa aufweist.

Gerade die kombinierte Führung vergleichsweise eng benachbarter Sollbruchnähte 32, 34 und die dadurch erreichbare Flexibilität bei der Vorgabe des Berstverhaltens stellen dabei im übrigen sicher, dass unabhängig vom Autositztyp und von der genauen Positionierung des Seitenairbags im Autositz 2 die Funktionsfähigkeit des Seitenairbags auch bei montiertem Schutzbezug 1 sichergestellt ist.

Die Sollbruchnähte 32, 34 sind im Ausführungsbeispiel jeweils als durchgängige Naht, also unter Vermeidung von Nahtansätzen innerhalb der jeweiligen Sollbruchnaht 32, 34, ausgeführt, die sich über die gesamte Länge des Seitenstreifens 10 erstreckt. Alternativ kann sich die jeweilige Sollbruchnaht 32, 34 aber auch über lediglich eine geeignet gewählte Teillänge des Seitenstreifens 10 erstrecken. Weiterhin ist die Sollbruchnaht 32, 34 jeweils als sogenannte Doppelsteppstichnaht ausgeführt. Als Nähfaden kommt für die Sollbruchnaht 32, 34 ein Nähfaden mit einer Feinheit von Nm 150 zum Einsatz. Wie sich herausgestellt hat, weist eine solchermaßen ausgebildete Sollbruchnaht 32, 34 einen Berstdruck von etwa 200 kPa und somit von deutlich weniger als 600 kPa und deutlich weniger als 400 kPa auf. Als Nähfaden für die Sollbruchnaht 32, 34 ist PES-Umspinnzwirn mit einer Soll-Höchstzugkraft von 910 cN vorgesehen, der mit einem Nadelsystem 137 R mit einer Nähnadelfeinheit Nm 60 und einer Stichdicke von 3,5 Stichen pro 10 mm verarbeitet wird.

Um die Funktionssicherheit der Seitenairbags auch bei am Autositz 2 angebrachtem Schutzbezug 1 in besonderem Maße zu gewährleisten, ist dieser weiterhin im Bereich des dritten Abdeckteils 8 mit an den Seitenstreifen 10, 12 angreifenden Spannmitteln 36 versehen. Die Spannmittel 36 dienen dabei einerseits zur sicheren Befestigung des Schutzbezugs 1 an der Lehne des Autositzes 2. Weiterhin greifen die Spannmittel 36 aber auch derart an den Seitenstreifen 10, 12 an, dass diese geeignet unter Vorspannung gesetzt werden können. Dadurch werden auch die die Seitenstreifen 10, 12 jeweils mit dem zweiten Abdeckteil 6 verbindenden Sollbruchnähte 32, 34 unter Vorspannung gesetzt. Gerade bei einer solchermaßen aufgebrachten Vorspannung ist in besonderem Maße sichergestellt, dass die Sollbruchnähte 32, 34 bedarfsgerecht bei Auslösen des in der Lehne des Autositzes 2 angebrachten Seitenairbags zuverlässig aufreißen und somit ein vollständiges Entfalten des jeweiligen Seitenairbags ermöglichen.

Wie insbesondere aus den Darstellungen in Fig. 2 und Fig. 3 erkennbar ist, umfassen die Spannmittel 36 eine Anzahl von jeweils paarweise miteinander verbindbaren Seilzugelementen 38, die ihrerseits endseitig mit jeweils einem der Seitenstreifen 10, 12 verbunden sind. Jedes zusammenwirkende Paar von Seilzugelementen 38 ist dabei jeweils in einem auf das dritte Abdeckteil 8 aufgesteppten Tunneldurchzug 39 geführt; innerhalb des jeweiligen Tunneldurchzugs 39 sind die Seilzugelemente 38 dabei durch die jeweilige strichlierte Linie angedeutet. In der Mitte des jeweiligen Tunneldurchzugs 39 sind die Seilzugelemente 38 über ein Paar von Ösen aus dem jeweiligen Tunneldurchzug 39 herausgeführt.

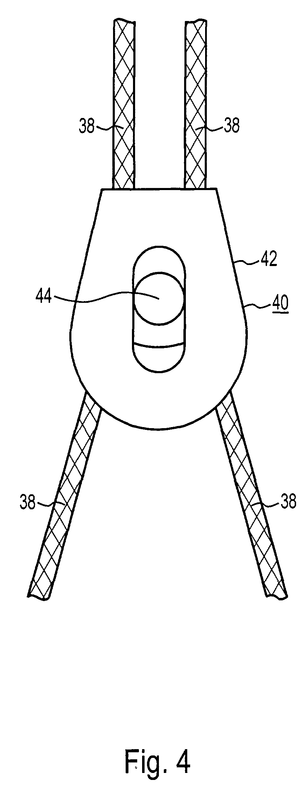

Die Seilzugelemente 38, im Ausführungsbeispiel Kordeln, können zur Vorspannung der Sollbruchnähte 32, 34 paarweise geeignet miteinander verschlungen oder verknotet werden. Für eine besonders einfache Handhabbarkeit gerade bei der Montage des Schutzbezugs 1 sind die Seilzugelemente 38 jedoch, wie in Fig. 4 dargestellt, über ein Schnellverschlußelement 40 geführt. Dieses umfaßt ein Führungsgehäuse 42, das die Seilzugelemente 38 durchlaufen, und ein darin angeordnetes Rastelement 44. Über dieses sind die Seilzugelemente 38 mit der Innenwand des Führungsgehäuses 42 verklemmbar, so daß auf einfache Weise eine lösbare Fixierung der Seilzugelemente 38 einstellbar ist.

Für eine besonders einfache Handhabung weist der Schutzbezug 1 an seinen Seitenstreifen 10, 12 eine Anzahl von Griffmitteln 46 auf. Die Griffmittel 46 ermöglichen dabei ein besonders einfaches Ab- oder Aufziehen des Schutzbezugs 1 auf den Autositz 2 und sind im Ausführungsbeispiel als Griffschlaufen oder Grifflaschen ausgebildet. Weiterhin ist im Kopfbereich eine auch als Aufhänger nutzbare Griffschlaufe als weiteres Griffmittel 48 angeordnet.

Der Schutzbezug 1 ist aus einem öl- oder flüssigkeitssaugfähigen Gewebe gefertigt, wobei beispielsweise ein baumwollhaltiges Mischgewebe oder auch ein Mikrofasergewebe mit Ölsaugeffekt vorgesehen sein kann. Das Gewebe ist dabei hinsichtlich Belastbarkeit derart gewählt, dass der Schutzbezug 1 insgesamt für sogenannte industrielle Waschbarkeit, also für zumindest etwa 30 Industriemaschinenwäschen, geeignet ist. Eine Industriemaschinenwäsche bezeichnet dabei einen Waschvorgang mit einer Dauer von etwa 20 min. bei einer Temperatur von etwa 75°C bei einem Flottenverhältnis von 1:4. Ein Flottenverhältnis von 1:4 ist dabei gegeben bei einem Waschwasseranteil von 41 pro kg zu waschender Textilmenge, wobei das Waschwasser eine Detergenzienkonzentration von etwa 4g eines Standard-Industriewaschmittels pro I Wasser aufweist. Das Gewebe weist weiterhin ein Gewebegewicht von etwa 300 g/m² auf und liegt somit im Bereich von 100 g/m² bis 1000 g/m². Das Gewebe kann weiterhin auch zumindest einseitig mit einer flüssigkeitsdichten Beschichtung versehen sein, so dass ein Durchtreten von Flüssigkeit, insbesondere Öl, auf den Autositz 2 sicher verhindert.

### Bezugszeichenliste

- 1: Schutzbezug
- 2: Autositz
- 4, 6, 8: Abdeckteile
- 10, 12: Seitenstreifen
- 14: Nahtführung
- 16: Verbindungsnaht
- 18: Schürze
- 20: Ecken
- 22: Schrägband
- 24: Bereich der Kopfstütze
- 26: vorderes Teil
- 28: Etikett
- 30: Verbindungsnaht
- 32, 34: Sollbruchnähte
- 36: Spannmittel
- 38: Seilzugelement
- 39: Tunneldurchzug
- 40: Schnellverschlußelement
- 42: Führungsgehäuse
- 44: Rastelement
- 46, 48: Griffmittel

## Patentansprüche

1. Schutzbezug (1) für einen Autositz (2) mit einem ersten Abdeckteil (4) für die Sitzfläche, einem zweiten Abdeckteil (6) für die Lehnenvorderseite und einem dritten Abdeckteil (8) für die Lehnenrückseite, wobei das zweite Abdeckteil (6) und das dritte Abdeckteil (8) zur Bildung einer Bezugshülle in Seitenbereichen jeweils über einen Seitenstreifen (10, 12) miteinander verbunden sind, und wobei an den Seitenstreifen (10,12) Spannmittel (36) derart angreifen, daß über die Spannmittel (36) eine im Bereich eines Seitenstreifens (10, 12) und/oder des zweiten Abdeckteils (6) geführte erste Sollbruchnaht (32) mit einer Vorspannung beaufschlagbar ist.

2. Schutzbezug (1) nach Anspruch 1, bei dem im wesentlichen parallel zur jeweils ersten Sollbruchnaht (32) im zweiten Abdeckteil (6) jeweils eine zweite Sollbruchnaht (34) geführt ist.

3. Schutzbezug (1) nach Anspruch 1 oder 2, bei dem jede Sollbruchnaht (32, 34) einen Berstdruck von weniger als 600 kPa, vorzugsweise von weniger als 400 kPa, aufweist.

4. Schutzbezug (1) nach einem der Ansprüche 1 bis 3, bei dem die oder jede Sollbruchnaht (32, 34) als Doppelsteppstichnaht ausgeführt ist.

5. Schutzbezug (1) nach einem der Ansprüche 1 bis 4, bei dem die oder jede Sollbruchnaht (32, 34) mit einem Nähfaden einer Feinheit von zumindest Nm 120, vorzugsweise zumindest Nm 150, ausgeführt ist.

6. Schutzbezug (1) nach einem der Ansprüche 1 bis 5, bei dem die oder jede Sollbruchnaht (32, 34) mit PES-Umspinnzwirn als Nähfaden ausgeführt ist.

7. Schutzbezug (1) nach einem der Ansprüche 1 bis 6, bei dem eine Verbindungsnaht (30) des zweiten Abdeckteils mit dem jeweiligen Seitenstreifen (10, 12) als erste Sollbruchnaht (32) ausgeführt ist.

8. Schutzbezug (1) nach einem der Ansprüche 1 bis 7, dessen Spannmittel (36) eine Anzahl von jeweils paarweise miteinander verbindbaren Seilzugelementen (38) umfassen, wobei jeweils eines der paarweise zusammenwirkenden Seilzugelemente (38) mit jedem der Seitenstreifen (10, 12) verbunden ist.

9. Schutzbezug (1) nach Anspruch 8, bei dem jedes zusammenwirkende Paar von Seilzugelementen (38) jeweils in einem auf das dritte Abdeckteil (8) aufgesteppten Tunneldurchzug (39) geführt ist.

10. Schutzbezug (1) nach einem der Ansprüche 1 bis 9, der eine Anzahl von Griffmitteln (46, 48) zum Ab- oder Aufziehen auf den Autositz (2) aufweist.

11. Schutzbezug (1) nach einem der Ansprüche 1 bis 10, bei dem die freien Ränder der Abdeckteile (4, 6, 8) mit einem Schrägband (22) eingefasst sind.

12. Schutzbezug (1) nach einem der Ansprüche 1 bis 11, dessen Abdeckteile (4, 6, 8) aus einem ölsaugfähigen Gewebe gefertigt sind.

13. Schutzbezug (1) nach Anspruch 12, bei dem das Gewebe ein Gewebegewicht von 100 bis 1000 g/m², vorzugsweise von etwa 300 g/m², aufweist.

14. Verwendung eines Schutzbezugs (1) nach einem der Ansprüche 1 bis 13 zu einer lediglich vorübergehenden Abdeckung eines Autositzes (2), insbesondere während eines Werkstattaufenthaltes.
